# EUROPEAN PATENT SPECIFICATION

(11) **EP 1 300 997 B1**
(45) Date of publication and mention of the grant of the patent: **09.05.2007**
(21) Application number: 02254884.6
(22) Date of filing: 11.07.2002
(51) Int. Cl.: H04L 12/58, H04L 29/06

(54) **System and method for preventing unsolicited e-mail**
System und Verfahren zur Verhinderung unverlangter elektronischer Post
Système et procédé de prévention de courrier électronique non sollicité

(30) Priority: 06.10.2001 KR 2001061649; 29.05.2002 KR 2002029828
(43) Date of publication of application: 09.04.2003
(73) Proprietor: Terrace Technologies, Inc., Sungdong-gu, Seoul 133-821 (KR)
(72) Inventor: Lim, Sung-Yeop, Jungnang-ju, Seoul 131-120 (KR); Lee, Woo-Joo, Gwangjin-gu, Seoul 143-222 (KR)
(74) Representative: TER MEER - STEINMEISTER & PARTNER GbR

(56) References cited:
- EP-A- 0 909 072
- WO-A-01/38999
- US-B1- 6 189 035

## Description

This invention relates generally to electronic mail service system and method, and more particularly to a dynamic IP filtering technology that adopts a varying start time conception to continuously filter IP addresses, apply multiple IP filtering policies and implement various IP filtering policies to a single IP group according to time.

Distributed computer networks such as the Internet are increasing global communication for information exchange and dissemination, and peer-to-peer communication using an electronic mail (email) system has become a daily business. Email is a widely used network application in which text messages are transmitted electronically between end users over various types of networks using various network protocols. The email system is a distributed client/server system having equivalent servers for providing email services to the clients. The email system is based on an open system where the clients communicate with the server to transmit and receive an email message and the server communicates with other servers. This open nature exposes the problems of ever increasing UCE (Unsolicited Commercial Email) such as spam mails, junk mails, email bombs and the like (referred to herein collectively as 'spam mail').

Since the 1990s, with the rise in commercial awareness of the Internet, spam mails have been used to indiscriminately send large amounts of unsolicited email messages for the purpose of commercial advertisement at lower cost. Spam mail has become a serious threat to both the ISPs (Information Service Providers) and end users. The ISPs waste their system resources in dealing with the spam mail network resources in transmitting spam messages of more than several giga byte targeted to over hundred thousands users, and additional communications costs and the loss of system and human resources in taking counter-measures, e.g., automatic returning the spam mail to the sender and processing refusal or complaint messages from the spam recipients. Likewise, many receivers pay for the time to distinguish actual mail from the spam mail and waste computing resources.

Conventional methods to solve the spam mail threat include a recipient approach and an email service provider approach. This server-based solution is a combination of a MTA control technology and a contact regulation in which a spam sender is prohibited from using anonymous configurations and the relay of SMTP (Simple Mail Transfer Protocol) is blocked.

Generally, mail server traffic in an ISP is 5 to 10 times more in receiving email than in transmitting email, and spam mail amounts to about 60 to 80% of the receiving mail traffic. Many spammers hide behind false return addresses and deliberately write messages to mislead recipients. Therefore, the most reliable method to prevent spam mail may be reading and reviewing one by one the titles and body texts of mail messages to determine if the mail is spam. However, this takes too much time and costs both to the ISPs and end users, and determination of spam mail is difficult since the criteria of the determination is subjective.

Therefore, technical measures are needed on behalf of the Internet and email communities to more effectively solve the problems of spam mails

US 6,189,035 B2 describes a method for protecting a network from data packet overload. Herein, data packets originating in an external network are received by an input buffer and then sent to an external packet process. In this process, a source address table is employed, which stores the addresses of data packet sources. In case an IP address of an incoming data packet is not found in the source table, it is determined whether the source address table has free space to receive another source address entry. If the table does not have free space for another entry, the data packet being processed is discarded. If there is free space in the source address table for the entry of another source address, the data packet's IP address is entered into the source address table and it is noted as being from a particular IP source and a flag is set to indicate that the particular IP source has sent a data packet to the internal network. Further, a recent packet count is employed for each IP source that sends data packets to the internal network during a most recent cycle, where a cycle is a time period of several minutes or hours. If the count exceeds a predetermined upper limit, then data packets from all non-trusted sources are rejected. In order to reset the overflow status of the source address table, a clean-up process is executed repetitively in a predetermined period of time.

### SUMMARY OF THE INVENTION

An object of this invention is to minimize the loss of email service providers due to spam mail.

Another object of this invention is to effectively maintain and control the traffic of spam mail in the email service providers and to prevent damages from spam mail.

Yet another object of this invention is to provide an email service system and method that can apply separate spam blocking policies to IP (Internet Protocol) groups that request a connection to the system and can flexibly apply various IP filtering or blocking policies to a single IP group.

These objects are achieved by the email service system of Claim 1 and the method of claim 6. Preferred embodiments are contained in the subclaims.

According to one aspect of the present invention, a connection request from a remote host is denied by an email service system, if the number of connection requests from the remote host exceeds a predetermined reference number, and the responsibility to re-send the denied email is transferred to the requesting host. For the determination of connection permission or denial, the number of connection requests from the remote host is calculated with reference to a corresponding IP address. By the IP filtering scheme, traffic of the email service system can be effectively managed and controlled.

According to other aspects of the present invention, various IP filtering policies may be applied to different IP groups or to a single IP group according to time, so that the traffic within the email service system can be controlled more effectively and the dynamic IP filtering technology is implemented more flexibly in diverse circumstances.

The invention will now be described by way of example with reference to the accompanying drawings in which:
Figs. 1 is a block diagram of overall configuration of an electronic mail network according to the present invention;
Fig. 2 is a schematic diagram for showing IP blocks and recorders in an electronic mail service system of the present invention;
Fig. 3 is a flow chart of the processes of a dynamic IP addresses filtering method in the electronic mail service system;
Fig. 4 is a block diagram for showing multiple policy technology applied to different IP blocks with different IP blocking policies according to the present invention;
Fig. 5 is a block diagram for illustrating an embodiment in which different IP filtering policies are applied to a single IP group according to time; and
Fig. 6 is a block diagram of an email service system implemented in a form of ASP (Application Service Provider).

### DETAILED DESCRIPTION OF PREFERRED EMBODIMENTS

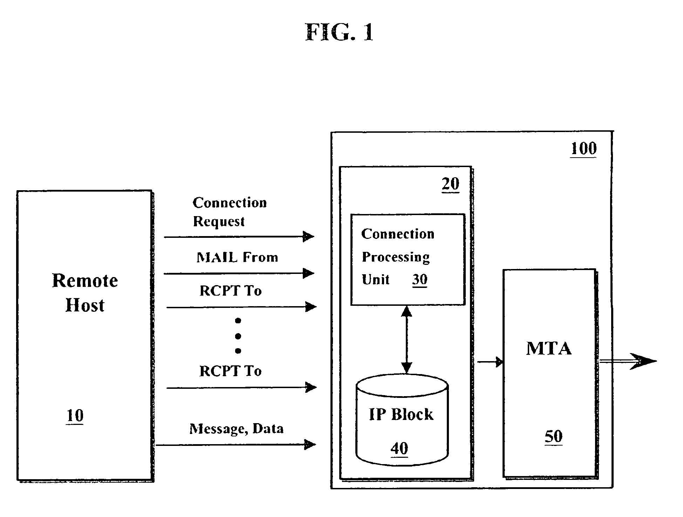

Fig. 1 shows a configuration of the electronic mail network according to the present invention. The email network is a distributed computer system for generating, accessing, transmitting and receiving email and based on protocols including but not limited to IMAP (Internet Messaging Access Protocol), POP (Post Office Protocol) and SMTP (Simple Mail Transfer Protocol).

A remote host 10 is connected to the email service system 100 through a network including a public network such as the Internet and LAN (Local Area Network). The remote host 10 may be an individual user client system or include a server system equivalent to the email service system 100. The network has plenty of connection nodes and communication is performed by using Internet Protocol (IP). The IP is widely known as a standard to communicate data. Upper layer protocols such as HTTP (HyperText Transfer Protocol) and FTP (File Transfer Protocol) communicate on an application layer, while lower layer protocols such as TCP/IP (Transmission Control Protocol/Internet Protocol) undertake communications on transport and network layers. Mail messages are sent to the address e.g. <receiver@terracetech.com> using the SMTP protocol.

The email service system 100 includes one or more server computers and may configure a part of private intranet connected to the public network. For security, the communications between the public network and private intranet may be filtered and controlled by a firewall. The firewall restricts outsiders from accessing to a certain resources within the intranet. The server computer included in the email service system 100 is configured to execute server software programs on behalf of clients. The server computer is configured to maintain user accounts, to receive and organize mail messages so that they can readily be located and retrieved, no matter how the information in the message is encoded. The server computer may include a web server, CGI (Common Gateway Interface) programs, an account manager and SMTP mail server.

The email service system 100 comprises a dynamic IP address filtering module 20 and a mail transfer agent (MTA) 50 such as Sendmail^{™} and Qmail^{™}. The MTA 50 includes a transfer MTA, a receiver MTA and a gateway MTA. The filtering module 20 comprises a connection processing unit 30 and an IP block 40. The email service system 100 receives new email messages using e.g. POP-3 protocol from the remote host 10 and transmits email messages by using SMTP (Simple Mail Transfer Protocol) or ESMTP (Extended SMTP) protocols.

The remote host 10 sends to the service system 100 a connection request and transfers to the service system 100 an email message, a file to be attached to the message and data necessary for transmitting the email messages e.g. MAIL From <spam@host.domain>, RCPT To <receiver@host.domain>. The connection processing unit 30 of the dynamic IP address filtering module 20 determines a permission of connection to the request from the remote host 10 with reference to the IP block 40. If connection is permitted, data and message transmitted from the remote host 10 are delivered to the MTA 50 and transferred to the designated email receiver or another remote host. The determination of the connection permission to the remote host 10 depends on the comparison result of reference value with the number of connection requests based on the IP address from a certain remote host, which will be explained in detail below.

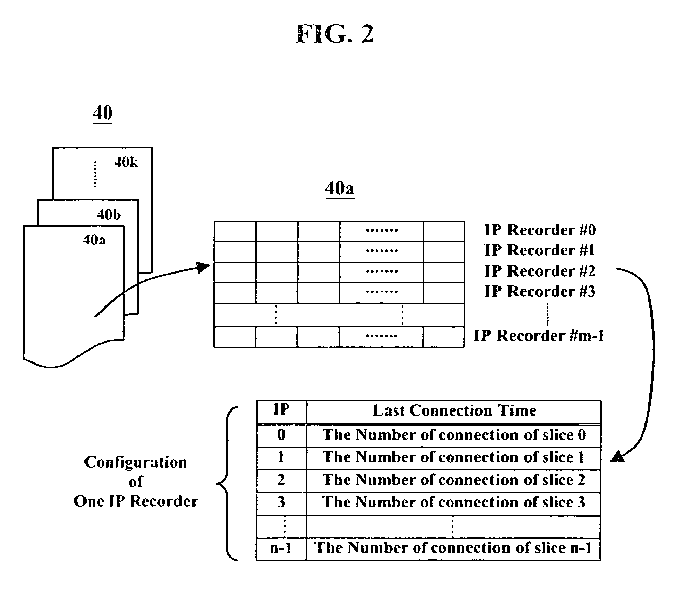

Fig. 2 is conceptual diagram of configuration of the IP block and recorders in the email service system according to the present invention. The IP block in the email service system 100 is data stored in advance. When a remote host 10 requests a connection, an IP address associated to the remote host is recorded. The IP block 40 includes a plurality of IP groups 40a, 40b, ---, 40k which are arranged according to a predetermined rule of IP address grouping. The connection processing unit 30, receiving the connection request from a remote host 10, searches and extracts from the IP block 40 an IP address corresponding to the requesting remote host. It is preferable to configure the IP block of IP addresses by using e.g. a hash function, so that the connection permission can be determined with respect to concurrent plural connection requests. A single IP group (e.g. 40a) consists of a plurality of recorders (#0 ~ #m-1), and one recorder is formed to one IP address. Each of the recorders consists of a number of slices, e.g. 'n' slices from 'slice 0' to 'slice n-1'. The slice is a unit dividing the recorder based on time. In each of the slices, the number of connection request received from a certain remote host is recorded.

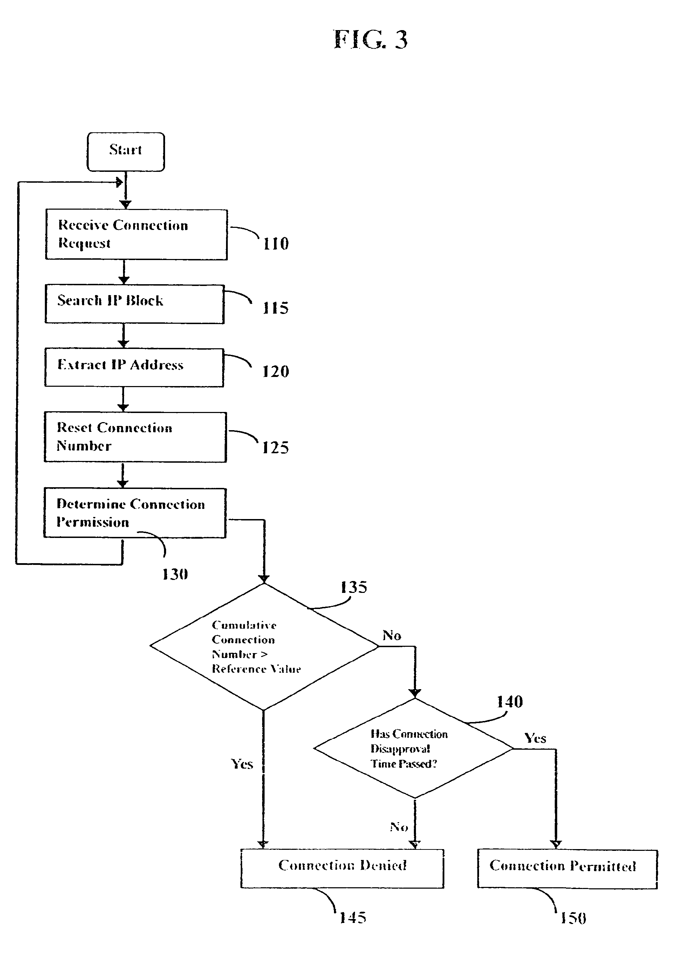

Fig. 3 shows the processing flow of the dynamic IP address filtering in an email service system of the present invention.

A connection request from a remote host is received at step 110. An IP address of the requesting remote host is extracted at step 120 by searching the IP block at step 115. Permission of connection of the remote host is preliminarily determined at step 130 based on cumulative number of requests from the extracted IP address. The determination is made at step 135 by examining if the total summation of requests exceeds a reference value. Here, the total summation request is obtained by adding the current request and cumulative number of requests that are recorded in the slices corresponding to time ranging from the nearest past connection requesting time (i.e. the previous requesting time) to the current request to time retroactive to a predetermined control period. For instance, suppose that a single recorder has ten slices, these slices are controlled in ten-minute time unit, the current request is received at 12:13, and the previous requesting time is 12:11. Among data recorded in the entire slices 0-9, the number of connections stored in slices 3-9 (i.e. slices corresponding to time between 12:03 to 12:10), the number of connection recorded in slice 0 (i.e. slice corresponding to time between 12:10 to 12:11) and the current connection request are summed to be the cumulative number of requests, and at step 135 the cumulative value is compared with the reference value. The reference value is determined by synthetically considering system resources of the email service provider, dimension of users, and traffic and denoted as the number of request per time.

If the cumulative connection number exceeds the reference value, the connection of the remote host corresponding to the associated IP address is denied at step 145. Even when the cumulative number of requests from a remote host does not exceed the reference value, it is determined that a connection disapproval time to the associated IP address has passed at step 140. When the connection disapproval time has not passed, the connection of the remote host corresponding to associated IP address is denied. If the connection disapproval time is passed or there have been no precedent cases to deny the connection, the connection is permitted at step 150 and email message and data are transferred to the MTA 50 to carry out normal email transmission process.

Prior to the determination of connection permission 130, the connection number is reset at step 125. The reset step of the connection number 125 resets the number of connection in slices between the previous connection time and current time to be '0'. In case of the example above, between slices corresponding to the previous requesting time 12:11 and the current time 12:13 there exists a slice to 12:02. This is because there is no connection between the previous connection time and current time and thus in this time interval connection number data is recorded in slice(s) corresponding to past time prior to time retroactive to the slice control time (in this instance ten minutes). Accordingly, the connection time data stored in the past slice is reset to '0' so that the control time can be maintained as continuous time value.

After the determination step of connection permission 130, the sequence flows back to the receiving step of new connection request 110. It may be considered to memory the IP address to which the connection is permitted and to omit the searching IP block to the identical IP address. However, in view of system resources to memory or store the IP address data in connection with the connection permission, it is preferable to search the IP block and extract corresponding IP address whenever a connection is requested.

In use of the dynamic IP filtering technique, multiple time policies can be applied to a single data structure.

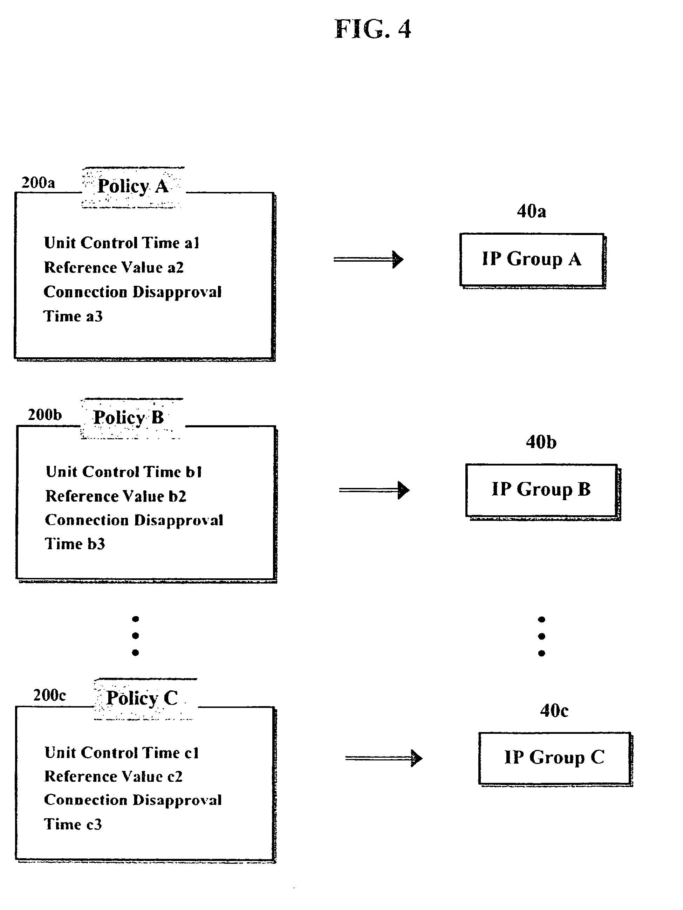

Fig. 4 is a block diagram illustrating the multiple time policies by which different policies are applied to each of the plural of IP blocks. IP filtering policy A 200a applied to IP group A 40a has different unit control time, reference value and connection disapproval time from those of policies B and C 200b and 200c. At this time, the 'unit control time' means the period of time used for summing the requested number at step 135 of Fig. 3, and the 'reference value' refers the reference number compared with the summation of cumulative number of request during the unit control time and the current request. The multiple IP filtering policy has, for instance, the unit control time a1 of one hour, the reference value 12 of 10 times, and the connection disapproval time a3 of two hours to an IP group A 40a having IP addresses from 210.220.10.0 to 20.220.250.255, while an IP group B 40b of IP addresses ranging from 210.0.10.0 to 210.220.0.0 is subject to IP filtering policy B 200b which has the unit control time b1 often minutes, the reference value b2 of 10 times, and the connection disapproval time b3 of thirty minutes. In the multiple IP filtering policy, a default policy may be applied to IP groups that does not need a special policy. When it is required to confirm if a certain IP address is to be blocked, parameters in associated IP filtering policy to the IP group including the certain IP address may be called and read. The policy parameters (e.g. unit control time, reference value, and connection disapproval time) are applied to the associated IP filtering policy and calculated.

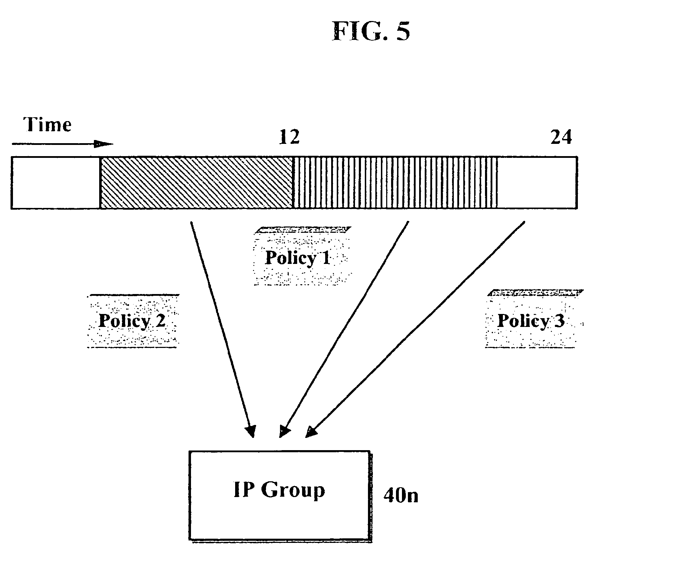

As shown in Fig. 5, different policies may be applied to a single IP group 40n according to time. By doing this, it is possible to apply dynamically and flexibly a specially reinforced policy to a certain time period when requests for spam mails are peak and thus more efficient management of server traffic is made possible.

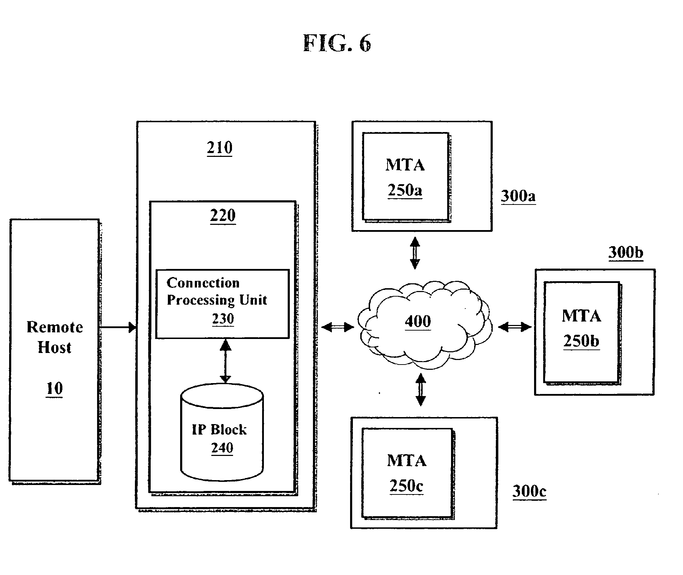

Fig. 6 is a block diagram of an email service system implemented in a form of ASP (Application Service Provider). The email service system 210 receives a connection request, a signal necessary for transmission of email message, an email message and file attached to the message, and the dynamic IP filtering module 220 determines the permission of connection to the request from a remote host 10. When the connection is permitted, the email service system 210 transfers the email message and necessary data to a plurality of remote servers 300a. 300b and 300c interconnected via a communication network 400. The dynamic IP filtering module 220 includes, like the system 100 of Fig. 1, a connection processing unit 230 and an IP block 240. The remote servers 300a, 300b and 300c has their own MTA 250a, 250b and 250c, which may include a transfer MTA, receiving MTA and gateway MTA.

In the ASP implementation of the email service system of the present invention, each of the remote servers 300a, 300b and 300c can utilize outside resources of IP filtering module and thus can save their own system resource.

## Claims

1. An email service system (210) having a dynamic filtering module (220) and comprising:
- means for receiving a connection request from a remote host (110),
- means for searching (115) and extracting (120) from an IP block (40) an IP address corresponding to the requesting remote host (10), and
- means for determining permission of connection (130) by comparing a predetermined reference value with a summation value of the number of past requests made during a predetermined control time period and the current request from the extracted IP address, wherein the predetermined control time period is divided into a number of slices and the summation value is obtained by adding the current request and cumulative number of requests that are recorded in the slices corresponding to time ranging from the nearest past connection requesting time to the time determined retroactive for a predetermined control period from the current request, and wherein the dynamic filtering module includes means for resetting (125), before the determination of connection permission (130), the number of connection requests in the slice(s) between the previous connection request time and the current time to be "0".

2. The email service system of Claim 1, wherein a connection disapproval time is established for the IP address when the determination means denies the connection, and connection of the IP address is blocked until the connection disapproval time passes.

3. The email service system of Claim 2, wherein the IP block (40) includes a plurality of IP groups (40a,40b,...,40k) and an IP filtering policy applied to one IP group is different from that applied to other IP groups, each IP filtering policy including data for the predetermined control time, the reference value and parameters related to the connection disapproval time.

4. The email service system of Claim 2, wherein the IP block (40) includes a plurality of IP groups (40a,40b,...,40k), and plural IP filtering policies are applied to a single IP group, each policy including data for the predetermined control time period, the predetermined reference value and parameters related to the connection disapproval time.

5. The email service system of any preceding claim and interconnected to a plurality of remote servers (300a,300b,300c) via a communication network (400), the remote servers (300a,300b,300c) each having a mail transfer agent (MTA), the email service system (210) further comprising means for transferring to a corresponding remote server (300a,300b,300c) an email for which connection is permitted by the determination means (130).

6. A method for dynamically filtering an IP address in an email service system (210), the method comprising:
- receiving a connection request from a remote host (110),
- searching (115) and extracting (120) from an IP block (40) an IP address corresponding to the requesting remote host (10), and
- determining permission of connection (130) by comparing a predetermined reference value with a summation value of the number of past requests made during a predetermined control time period and the current request from the extracted IP address, wherein the predetermined control time period is divided into a number of slices and the summation value is obtained by adding the current request and cumulative number of requests that are recorded in the slices corresponding to time ranging from the nearest past connection requesting time to the time determined retroactive for a predetermined control period from the current request; and
- resetting (125), before the determination of connection permission (130), the number of connection requests in the slice(s) between the previous connection request time and the current time to be "0".

7. The method of Claim 6, wherein a connection disapproval time is established for the IP address when the determination means denies the connection, and connection of the IP address is blocked until the connection disapproval time passes.

8. The method of Claim 7, wherein the IP block (40) includes a plurality of IP groups (40a,40b,...,40k) and an IP filtering policy applied to one IP group is different from that applied to other IP group, each IP filtering policy including the predetermined control time period, the predetermined reference value and parameters related to the connection disapproval time.

9. The method of Claim 7, wherein the IP block (40) includes a plurality of IP groups (40a,40b,...40k) and a plurality of IP filtering policies are applied to a single group, each IP filtering policy including the predetermined control time period, the predetermined reference value and parameters related to the connection disapproval time.

10. The method of any one of Claims 6 to 9, wherein the IP block (40) including recorders (#0 ~ #m-1) each corresponding to one IP address, each of the recorders (#0 ~ #m-1) comprising a plurality of slices continuously managed according to the predetermined control time period, and to each of the recorders is written the number of connection requests of the corresponding IP address.

11. The method of any one of Claims 6 to 10, wherein, after the determination step (130), the sequence returns to the step of receiving (110) a connection request from a remote host.

12. The method of any one of Claims 6 to 11 wherein the email service system (210) is connected to a plurality of remote servers (300a,300b,300c) each of which has its own mail transfer agent (MTA), the method further comprising transferring an email associated with the remote host (110) for which connection is permitted by the determination step (130) to the corresponding remote server (300a,300b,300c).

## Patentansprüche

1. E-mail-Dienstsystem (210) mit einem dynamischen Filtermodul (220), und mit:
- Mitteln zum Empfangen einer Verbindungsanfrage von einem entfernten Host oder Leitrechner (110),
- Mitteln zum Suchen (115) und Entnehmen (120) einer IP-Adresse von einem IP-Block, die dem anfragenden entfernten Leitrechner (10) entspricht, und
- Mitteln zum Feststellen einer Verbindungsgenehmigung (130) durch Vergleichen eines vorbestimmten Referenzwertes mit einem Summationswert der Anzahl früherer Anfragen während einer vorbestimmten Kontrollzeitdauer und der aktuellen Anfrage von der entnommenen IP-Adresse, wobei die vorbestimmte Kontrollzeitdauer in eine Anzahl von Abschnitten unterteilt ist und der Summationswert durch Addieren der aktuellen Anfrage und der kumulativen Anzahl von Anfragen erhalten wird, die in den Abschnitten entsprechend einer Zeit aufgezeichnet sind, die von der Zeit der letzten Verbindungsanfrage bis zu dem von der aktuellen Anfrage für eine vorbestimmte Kontrolldauer zurückbestimmten Zeitpunkt reicht, und wobei das dynamische Filtermodul Mittel zum Zurücksetzen (125) auf "0", vor der Feststellung der Verbindungsgenehmigung (130), der Anzahl von Verbindungsanfragen in dem/den Abschnitt(en) zwischen der Zeit der vorausgehenden Verbindungsanfrage und der aktuellen Zeit umfasst.

2. E-mail-Dienstsystem nach Anspruch 1, wobei eine Verbindungsablehnungszeit für die IP-Adresse festgelegt wird, wenn das Feststellmittel die Verbindung verweigert, und die Verbindung der IP-Adresse blockiert wird, bis die Verbindungsablehnungszeit verstrichen ist.

3. E-mail-Dienstsystem nach Anspruch 2, wobei der IP-Block (40) eine Vielzahl von IP-Gruppen (40a, 40b, ..., 40k) umfasst und eine IP-Filterstrategie, die auf eine IP-Gruppe angewendet wird, unterschiedlich von denen ist, die auf andere IP-Gruppen angewendet werden, wobei jede IP-Filterstrategie Daten für die vorbestimmte Kontrollzeit, den Referenzwert und die Verbindungsablehnungszeit betreffende Parameter umfasst.

4. E-mail-Dienstsystem nach Anspruch 2, wobei der IP-Block (40) eine Vielzahl von IP-Gruppen (40a, 40b, ..., 40k) umfasst, und mehrere IP-Filterstrategien auf eine einzelne IP-Gruppe angewendet werden, wobei jede Strategie Daten für die vorbestimmte Kontrollzeitdauer, den vorbestimmten Referenzwert und die Verbindungsablehnungszeit betreffende Parameter umfasst.

5. E-mail-Dienstsystem nach einem der vorstehenden Ansprüche und zusammengeschaltet mit einer Vielzahl von entfernten Hauptrechner (Servern) (300a, 300b, 300c) über ein Kommunikationsnetzwerk (400), wobei die entfernten Hauptrechner (300a, 300b, 300c) jeweils einen Postübertragungsagenten (MTA) aufweisen, das E-mail-Dienstsystem (210) umfasst ferner Mittel zum Übertragen einer E-mail zu einem entsprechenden entfernten Hauptrechner (300a, 300b, 300c), für welchen die Verbindung durch das Feststellmittel (130) genehmigt wurde.

6. Verfahren zum dynamischen Filtern einer IP-Adresse in einem E-mail-Dienstsystem (210), wobei das Verfahren folgendes umfasst:
- Empfangen einer Verbindungsanfrage von einem entfernten Host oder Leitrechner (110),
- Suchen (115) und Entnehmen (120) einer IP-Adresse von einem IP-Block (40), die dem anfragenden entfernten Leitrechner (10) entspricht, und
- Feststellen einer Verbindungsgenehmigung (130) durch Vergleichen eines vorbestimmten Referenzwertes mit einem Summationswert der Anzahl vergangener Anfragen während einer vorbestimmten Kontrollzeitdauer und der aktuellen Anfrage von der entnommenen IP-Adresse, wobei die vorbestimmte Kontrollzeitdauer in eine Anzahl von Abschnitten unterteilt ist und der Summationswert durch Addieren der aktuellen Anfrage und der kumulativen Anzahl von Anfragen erhalten wird, die in den Abschnitten entsprechend einer Zeit aufgezeichnet sind, die von der Zeit der letzten Verbindungsanfrage bis zu dem von der aktuellen Anfrage für eine vorbestimmte Kontrolldauer zurückbestimmten Zeitpunkt reicht, und
- Setzen (125), vor der Feststellung der Verbindungsgenehmigung (130), der Anzahl von Verbindungsanfragen in dem/den Abschnitt(en) zwischen der Zeit der vorausgegangen Verbindungsanfrage und der aktuellen Zeit auf "0".

7. Verfahren nach Anspruch 6, wobei eine Verbindungsablehnungszeit für die IP-Adresse festgelegt wird, wenn das Feststellmittel die Verbindung verweigert, und die Verbindung der IP-Adresse blockiert wird, bis die Verbindungsablehnungszeit verstrichen ist.

8. Verfahren nach Anspruch 7, wobei der IP-Block (40) eine Vielzahl von IP-Gruppen (40a, 40b, ..., 40k) umfasst, und eine IP-Filterstrategie, die auf eine IP-Gruppe angewendet wird, unterschiedlich von der ist, die auf eine andere IP-Gruppen angewendet wird, wobei jede IP-Filterstrategie die vorbestimmte Kontrollzeitdauer, den vorbestimmten Referenzwert und die Verbindungsablehnungszeit betreffende Parameter umfasst.

9. Verfahren nach Anspruch 7, wobei der IP-Block (40) eine Vielzahl von IP-Gruppen (40a, 40b, ..., 40k) umfasst, und eine Vielzahl von IP-Filterstrategien auf eine einzelne IP-Gruppe angewendet wird, wobei jede IP-Filterstrategie die vorbestimmte Kontrollzeitdauer, den vorbestimmten Referenzwert und die Verbindungsablehnungszeit betreffende Parameter umfasst.

10. Verfahren nach einem der Ansprüche 6 bis 9, wobei der IP-Block (40) jeweils zu einer IP-Adresse gehörende Rekorder (#0 ~ #m-1) umfasst, und wobei die Rekorder (#0 ~ #m-1) jeweils eine Vielzahl von Abschnitten umfassen, die kontinuierlich gemäß einer vorbestimmten Kontrollzeitdauer verwaltet werden, und in jeden der Rekorder wird die Anzahl der Verbindungsanfragen der entsprechenden IP-Adresse geschrieben.

11. Verfahren nach einem der Ansprüche 6 bis 10, wobei, nach dem Feststellungsschritt (130), die Sequenz zu dem Schritt des Empfangens (110) einer Verbindungsanfrage von einem entfernten Leitrechner zurückkehrt.

12. Verfahren nach einem der Ansprüche 6 bis 11, wobei das E-mail-Dienstsystem (210) mit einer Vielzahl von entfernten Hauptrechnern (300a, 300b, 300c) verbunden ist, wobei jeder seinen eigenen Postübertragungsagenten (MTA) aufweist, und wobei das Verfahren ferner die Übertragung einer zu dem Leitrechner (110) zugehörigen E-mail umfasst, für den die Verbindung durch den Feststellungsschritt (130) zu dem entsprechenden entfernten Hauptrechner (300a, 300b, 300c) genehmigt wurde.

## Revendications

1. Système de service de courrier électronique (210) comprenant un module de filtrage dynamique (220), et comprenant:
- des moyens de réception d'une demande de connexion émanant d'un hôte distant (110);
- des moyens de recherche (115) et d'extraction (120) dans un bloc IP (40) d'une adresse IP correspondant à l'hôte distant appelant (10); et
- des moyens pour déterminer une autorisation de connexion (130) en comparant une valeur de référence prédéterminée avec une valeur d'addition du nombre de demandes passées effectuées pendant une période de temps de commande prédéterminée et de la demande actuelle à partir de l'adresse IP extraite, dans lequel la période de temps de commande prédéterminée est divisée en un nombre d'intervalles, et la valeur d'addition est obtenue en additionnant la demande actuelle et un nombre cumulé de demandes qui sont enregistrées dans les intervalles correspondant au temps s'écoulant entre le moment d'une demande de connexion passée la plus récente et le moment déterminé rétroactif pour une période de commande prédéterminée en partant de la demande actuelle, et dans lequel le module de filtrage dynamique comprend des moyens pour remettre à zéro ("0") (125), avant la détermination de l'autorisation de connexion (130), le nombre de demandes de connexion dans l'intervalle ou les intervalles entre le moment de la demande de connexion précédente et le moment présent.

2. Système de service de courrier électronique selon la revendication 1, dans lequel un temps de désapprobation de connexion est établi pour l'adresse IP lorsque les moyens de détermination refusent la connexion, et la connexion de l'adresse IP est bloquée jusqu'à ce que le temps de désapprobation de connexion soit passé.

3. Système de service de courrier électronique selon la revendication 2, dans lequel le bloc IP (40) comprend une pluralité de groupes IP (40a, 40b, ..., 40k), et une politique de filtrage IP appliquée à un groupe IP est différente d'une politique de filtrage appliquée à un autre groupe IP, chaque politique de filtrage IP comprenant des données pour la période de temps de commande prédéterminée, la valeur de référence prédéterminée et des paramètres relatifs au temps de désapprobation de la connexion.

4. Système de service de courrier électronique selon la revendication 2, dans lequel le bloc IP (40) comprend une pluralité de groupes IP (40a, 40b, ..., 40k), et plusieurs politiques de filtrage IP sont appliquées à un seul groupe, chaque politique de filtrage IP comprenant des données pour la période de temps de commande prédéterminée, la valeur de référence prédéterminée et des paramètres relatifs au temps de désapprobation de la connexion.

5. Système de service de courrier électronique selon l'une quelconque des revendications précédentes, ledit système étant interconnecté à une pluralité de serveurs distants (300a, 300b, 300c) par l'intermédiaire d'un réseau de communication (400), les serveurs distants (300a, 300b, 300c) possédant chacun un agent de messagerie (MTA), le système de service de courrier électronique (210) comprenant en outre des moyens pour transférer à un serveur distant correspondant (300a, 300b, 300c) un courrier électronique pour lequel une connexion est autorisée par les moyens de détermination (130).

6. Procédé de filtrage dynamique d'une adresse IP dans un système de service de courrier électronique (210), le procédé comprenant les étapes suivantes:
- la réception d'une demande de connexion émanant d'un hôte distant (110);
- la recherche (115) et l'extraction (120) dans un bloc IP (40) d'une adresse IP correspondant à l'hôte distant appelant (10); et
- la détermination d'une autorisation de connexion (130) en comparant une valeur de référence prédéterminée avec une valeur d'addition du nombre de demandes passées effectuées pendant une période de temps de commande prédéterminée et de la demande actuelle à partir de l'adresse IP extraite, dans lequel la période de temps de commande prédéterminée est divisée en un nombre d'intervalles, et la valeur d'addition est obtenue en additionnant la demande actuelle et un nombre cumulé de demandes qui sont enregistrées dans les intervalles correspondant au temps s'écoulant entre le moment d'une demande de connexion passée la plus récente et le moment déterminé rétroactif pour une période de commande prédéterminée en partant de la demande actuelle; et
- la remise à zéro (125), avant la détermination de l'autorisation de connexion (130), du nombre de demandes de connexion dans l'intervalle ou les intervalles entre le moment de la demande de connexion précédente et le moment présent.

7. Procédé selon la revendication 6, dans lequel un temps de désapprobation de connexion est établi pour l'adresse IP lorsque les moyens de détermination refusent la connexion, et la connexion de l'adresse IP est bloquée jusqu'à ce que le temps de désapprobation de connexion soit passé.

8. Procédé selon la revendication 7, dans lequel le bloc IP (40) comprend une pluralité de groupes IP (40a, 40b, ..., 40k), et une politique de filtrage IP appliquée à un groupe IP est différente d'une politique de filtrage appliquée à un autre groupe IP, chaque politique de filtrage IP comprenant la période de temps de commande prédéterminée, la valeur de référence prédéterminée et des paramètres relatifs au temps de désapprobation de la connexion.

9. Procédé selon la revendication 7, dans lequel le bloc IP (40) comprend une pluralité de groupes IP (40a, 40b, ..., 40k), et une pluralité de politiques de filtrage IP sont appliquées à un seul groupe, chaque politique de filtrage IP comprenant la période de temps de commande prédéterminée, la valeur de référence prédéterminée et des paramètres relatifs au temps de désapprobation de la connexion.

10. Procédé selon l'une quelconque des revendications 6 à 9, dans lequel le bloc IP (40) comprend des enregistreurs (#0 ~ #m-1) correspondant chacun à une adresse IP, chacun des enregistreurs (#0 ~ #m-1) comprenant une pluralité d'intervalles gérés de façon continue selon la période de temps de commande prédéterminée, et le nombre de demandes de connexion de l'adresse IP correspondante est écrit à chacun des enregistreurs.

11. Procédé selon l'une quelconque des revendications 6 à 10, dans lequel, après l'étape de détermination (130), la séquence retourne à l'étape de réception (110) d'une demande de connexion émanant d'un hôte distant.

12. Procédé selon l'une quelconque des revendications 6 à 11, dans lequel le système de service de courrier électronique (210) est connecté à une pluralité de serveurs distants (300a, 300b, 300c), chacun de ceux-ci possédant son propre agent de messagerie (MTA), le procédé comprenant en outre le transfert au serveur distant correspondant (300a, 300b, 300c) d'un courrier électronique associé à l'hôte distant (110) pour lequel une connexion est autorisée par l'étape de détermination (130).
